# EUROPÄISCHE PATENTSCHRIFT

(11) **EP 3 613 114 B1**
(45) Veröffentlichungstag und Bekanntmachung des Hinweises auf die Patenterteilung: **05.05.2021**
(21) Anmeldenummer: 18711282.6
(22) Anmeldetag: 12.03.2018
(51) Int. Cl.: H01T 1/20, H01T 4/10, H01T 4/12, H01T 15/00, H02H 9/06

(54) **BLITZ- UND ÜBERSPANNUNGSSCHUTZEINRICHTUNG FÜR DATENNETZWERKE, TELEFONIE, ELEKTROAKUSTISCHE ANLAGEN ODER BUSSYSTEME**
LIGHTNING AND OVERVOLTAGE PROTECTION DEVICE FOR DATA NETWORKS, TELEPHONY SERVICES, ELECTROACOUSTIC INSTALLATIONS OR BUS SYSTEMS
DISPOSITIF DE PROTECTION CONTRE LA FOUDRE ET LES SURTENSIONS POUR RÉSEAUX DE DONNÉES, TÉLÉPHONIE, INSTALLATIONS ÉLECTROACOUSTIQUES OU SYSTÈMES DE BUS

(30) Priorität: 20.04.2017 DE 102017108448; 09.11.2017 DE 102017126263
(43) Veröffentlichungstag der Anmeldung: 26.02.2020
(73) Patentinhaber: DEHN SE + Co KG, 92318 Neumarkt / Opf. (DE)
(72) Erfinder: SCHORK, Franz, 90461 Nürnberg (DE)
(74) Vertreter: Isarpatent
(86) Internationale Anmeldenummer: PCT/EP2018/056014
(87) Internationale Veröffentlichungsnummer: WO 2018/192713

(56) Entgegenhaltungen:
- EP-A1- 2 381 542
- DE-A1- 2 137 344
- US-A1- 2016 351 327

## Beschreibung

Die Erfindung betrifft eine Blitz- und Überspannungsschutzeinrichtung für Datennetzwerke, Telefonie, elektroakustische Anlagen oder Bussysteme mit mindestens zwei netzseitigen Eingangsklemmen sowie mindestens zwei Ausgangsklemmen, an welche die zu schützende Last anschließbar ist sowie weiterhin mit einem, die Eingangsklemmen verbindenden Gasentladungsableiter sowie einer zwischen der jeweiligen Ein- und Ausgangsklemme befindlichen Induktivität gemäß Patentanspruch 1.

In Datennetzwerken und in der Messsteuerungs- und Regelungstechnik existiert eine Vielzahl von Schnittstellen mit unterschiedlichen Anforderungen an die Leistungsfähigkeit der hierfür notwendigen Überspannungsschutzkomponenten.

Neben dem Schutz der betreffenden Schnittstelle vor Blitz- und Überspannungen müssen die eingesetzten Überspannungsableiter auch die systemrelevanten Signalparameter übertragen können.

Bekannte Schutzmodule, insbesondere für Datennetzwerke, Telefonie, elektroakustische Anlagen, Bussysteme oder dergleichen weisen zwischen den Eingangsklemmen befindliche Gasentladungsableiter auf, wobei zwischen den Eingangs- und Ausgangsklemmen jeweils Induktivitäten geschalten sind. Je nach Ausführungsform der Überspannungsfeinbegrenzung Ader zur Erde oder Ader zu Ader für den Schutz gegen unsymmetrische oder symmetrische Störungen sind noch TVS-Dioden zwischen den Ausgangsklemmen bzw. zwischen einer Ausgangsklemme und Erde geschalten.

Der diesbezügliche Stand der Technik ist geprägt durch die BLITZDUCTOR®-Module der Firma DEHN + SÖHNE GmbH + Co. KG, Neumarkt/Oberpfalz.

Nachteilig beim Einsatz der bekannten BLITZDUCTOR®-Einrichtungen ist die Längsinduktivität, die insbesondere im Dauerbetrieb nachteilig ist, da bei einer ohmschen Entkopplung eine nicht zu vernachlässigende Verlustleistung auftritt. Weiterhin ist ohne Anwendung zusätzlicher Schaltungskomponenten kein Schutz vor Gleichtaktstörungen möglich.

US 2016/351327 A1 offenbart eine Schutzvorrichtung gegen elektrostatische Entladung in Form einer CMC Drossel mit TVS-Dioden am Eingang und Ausgang. Konkret geht es dort um eine Multilayer-Struktur.

DE 21 37 344 A1 offenbart eine Schaltungsanordnung zum Überspannungsschutz von Fernmeldeeinrichtungen mit einer CMC-Drossel zur Entstörung von Gleichtaktstörspannungen. Für Gegentaktstörungen ist eine resistive Entkopplung über Widerstände nötig, welche im Überspannungsfall zum Ansprechen der Gasentladungsableiter führen.

Aus dem Vorgenannten ist es daher Aufgabe der Erfindung, eine weiterentwickelte Blitz- und Überspannungsschutzeinrichtung für Datennetzwerke, Telefonie, elektroakustische Anlagen, Bussysteme oder dergleichen Anwendungen anzugeben, welche die Nachteile des Standes der Technik vermeidet und darüber hinaus die Möglichkeit schafft, höhere Ströme zu tragen, indem eingesetzte Gasentladungsableiter nach einem Überspannungsfall wieder gelöscht werden können.

Die Lösung der Aufgabe der Erfindung erfolgt durch die Merkmalskombination nach Patentanspruch 1, wobei die Unteransprüche mindestens zweckmäßige Ausgestaltungen und Weiterbildungen umfassen.

Erfindungsgemäß werden die Induktivitäten der bekannten Blitz- und Überspannungsschutzeinrichtung, welche üblicherweise als ohmsche Widerstände ausgeführt sind, durch eine stromkompensierte Drossel mit Kern ersetzt, wobei die stromkompensierte Drossel eine Primärwicklung und eine Sekundärwicklung aufweist.

Eine stromkompensierte Drossel weist mehrere gleiche Wicklungen auf, die gegensinnig vom Arbeitsstrom durchflossen werden, so dass sich dessen magnetische Felder im Kern der Drossel aufheben. Bekannt ist der Einsatz stromkompensierter Drosseln zur Dämpfung von Störemissionen. Störströme treten in vielen Fällen gleichsinnig in Hin- und Rückleitung auf. Für derartige Gleichtaktstörungen kann eine stromkompensierte Drossel eine sehr hohe Induktivität bilden, da sich die Störstörme in ihr nicht kompensieren.

Im Fall der erfindungsgemäßen weitergebildeten Blitz- und Überspannungsschutzeinrichtung sind die Primärwicklung und die Sekundärwicklung der stromkompensierten Drossel so verschalten, dass der Laststrom die Wicklungen in unterschiedlichen Richtungen durchfließt, so dass sich die jeweiligen Magnetfelder aufheben.

Im Falle des Auftretens transienter Überspannungen wird erfindungsgemäß der auftretende Stoßstrom mittels einer sich dann schließenden Schalteinrichtung an einer der beiden Wicklungen vorbeigeführt. Beispielsweise kann hier die Schalteinrichtung so ausgebildet werden, dass im Fall transienter Überspannungen die Primärwicklung L₁ weiterhin durchströmt wird, hingegen die Sekundärwicklung L₂ keiner Strombelastung unterliegt.

Durch die stromdurchflossene Wicklung, im erwähnten Fall durch den Stromfluss in der Primärwicklung bei geschlossener Schalteinrichtung gelangt der Wicklungskern in die Sättigung und es ist die Kopplung zwischen Primär- und Sekundärwicklung nahezu aufgehoben mit der Folge, dass über der Last keine Spannung aufgebaut wird. Die Stromänderung in der Primärwicklung führt zu einer Spannung und sorgt dafür, dass der Gasentladungsableiter zündet mit der Folge, dass der gewünschte Überspannungsschutz eintritt. Eine Rückwirkung der Primärstromänderung auf die Sekundärseite ist wegen des gesättigten Kerns ausgeschlossen.

Erfindungsgemäß ist die Schalteinrichtung als Halbleiter, insbesondere als MOSFET, ausgebildet. Die Basis des Halbleiters bzw. das Gate des Halbleiters ist dabei mit einer der Eingangsklemmen verbunden, insbesondere mit derjenigen Eingangsklemme, an welche die Primärwicklung der stromkompensierten Drosseln angeschlossen ist.

In Weiterbildung der Erfindung kann als MOSFET insbesondere ein IGBT mit Freilaufdiode eingesetzt werden. Grundsätzlich besteht weiterhin die Möglichkeit, die Schalteinrichtung auf der Basis zwei antiparallel geschalteter IGBTs mit einer Seriendiode zu realisieren. Die Schalteinrichtung ist bipolar aufzubauen, um positive wie negative Überspannungen zu beherrschen.

Nach Ableiten der Überspannung bzw. des Stoßstromes kann mittels Öffnen der Schalteinrichtung der Gasentladungsableiter gelöscht werden, so dass die Schutzeinrichtung erneut betriebsbereit ist.

Der Wicklungskern wird bevorzugt als Ringkern realisiert.

Über das Ansprechverhalten der Schalteinrichtung lässt sich der gewünschte Schutzpegel vorgeben bzw. einstellen.

Insofern wird der Feinschutz durch den Halbleiter als Schalteinrichtung realisiert.

Mindestens die Primärwicklung, das heißt die Wicklung, die im Fall der geschlossenen Schalteinrichtung weiterhin stromdurchflossen ist, weist eine wirksame Induktivität von ≥ 2 µH auf.

Der Wicklungskern der stromkompensierten Drossel weist ein möglichst kleines Volumen auf, um den Kern schnell in eine Sättigung zu überführen, wenn die Schalteinrichtung in den Schließzustand übergeht.

In Weiterbildung der Erfindung ist die Basis oder das Gate des Halbleiters über eine TVS-Diode mit der betreffenden Eingangsklemme verbunden, wobei über die Diode der Schutzpegel und der Schaltpunkt für den Halbleiter festlegbar ist.

Mit der erfindungsgemäßen Lösung gelingt es nicht nur, einen Schutz im Sinne eines Filters gegen Gleichtaktstörungen durch Anwendung einer stromkompensierten Drossel zu bewirken, sondern es ist eine kaskadierbare Schutzeinrichtung geschaffen, welche schnell und sicher die angeschlossene Last von transienten Überspannungen und/oder Stoßströmen entkoppelt und gleichzeitig durch Aktivieren des Gasentladungsableiters das betreffende Überspannungsereignis unterdrückt. Durch Wahl der Induktivitäten, insbesondere durch die Primärwicklung, lässt sich eine ausreichend hohe Spannung zum sicheren Zünden des Gasentladungsableiters aufbauen.

Da die jeweiligen Induktivitäten der Wicklungen der stromkompensierten Drossel deutlich kleiner als diejenigen des Standes der Technik sind, ergibt sich eine deutlich geringere Verlustleistung im Dauerbetrieb.

Die eingesetzte stromkompensierte Drossel wird durch den Halbleiter als bevorzugte Schalteinrichtung quasi gesteuert, so dass die Drossel bei Impulsbelastung möglichst schnell in den Sättigungszustand übergeht, um die magnetische Gegenkopplung aufzuheben und gleichzeitig dafür zu sorgen, dass die Induktivität auf der Primärseite steigt.

Die Realisierung der stromkompensierten Drossel wird auch bezogen auf die Auswahl des Kerns so vollzogen, dass bei einer Sättigung des Kerns die Magnetfeldlinien der Primärseite nicht mehr auf die Sekundärseite gelangen.

Zusammengefasst zeigt sich das Wesen der Erfindung in der Anwendung stromkompensierter Drosseln, welche bevorzugt auf der Primärwicklungsseite einer Steuerung unterliegt derart, dass durch eine Schalteinrichtung im Überspannungsfall die Sekundärwicklung stromflussbefreit wird. Im normalen Dauerbetrieb durchfließt der Laststrom die gekoppelten Drosseln in unterschiedliche Richtungen mit der Folge des Aufhebens der Magnetfelder der beiden Spulen, so dass sich nur eine geringe Serieninduktivität einstellt.

Im Falle einer transienten Überspannung wird der Stoßstrom durch den Halbleiterschalter an der Sekundärdrossel vorbeigeleitet, was zur Folge hat, dass sich die Magnetfelder nicht mehr aufheben und die Induktivität im Drosselkreis steigt.

Die hohe Induktivität führt dazu, dass sich eine Spannung über dem Gasentladungsableiter aufbaut, wodurch dieser in gewünschter Weise gezündet wird. Nach dem Überspannungsereignis kann der Gasentladungsableiter durch den Halbleiterschalter gelöscht werden, was den Einsatz der erfindungsgemäßen Lösung auch bei hohen Nennströmen ermöglicht.

Die Erfindung soll nachstehend anhand eines Ausführungsbeispiels sowie unter Zuhilfenahme von Figuren näher erläutert werden.

Hierbei zeigen:
- Fig. 1a: ein Prinzipschaltbild der erfindungsgemäßen Blitz- und Überspannungsschutzeinrichtung im Normalbetrieb mit offener Schalteinrichtung S₁;
- Fig. 1b: ein ideales Ersatzschaltbild im Normalbetrieb mit offener Schalteinrichtung S₁;
- Fig. 2a: ein Prinzipschaltbild der erfindungsgemäßen Blitz- und Überspannungsschutzeinrichtung mit geschlossener Schalteinrichtung S₁; und
- Fig. 2b: ein Ersatzschaltbild im Überspannungsfall und gegebener Sättigung der Primärwicklung L₁.

Die erfindungsgemäße Blitz- und Überspannungsschutzeinrichtung wie in den Figuren dargestellt, geht von zwei Eingangsklemmen 1 und 2 aus, wobei an den Ausgangsklemmen 3, 4 eine Last angeschlossen ist.

Darüber hinaus ist ein die Eingangsklemmen 1; 2 verbindender Gasentladungsableiter GDT vorgesehen.

Zwischen der Eingangsklemme 1 und der Ausgangsklemme 3 liegt die Primärwicklung L₁ einer stromkompensierten Drossel mit Kern.

Zwischen der Eingangsklemme 2 und der Ausgangsklemme 4 liegt die Sekundärwicklung L₂ der stromkompensierten Drossel.

Weiterhin ist an der Ausgangsklemme 3 und an der Eingangsklemme 2 eine Schalteinrichtung S₁ angeschlossen, die beim Normalbetrieb geöffnet ist.

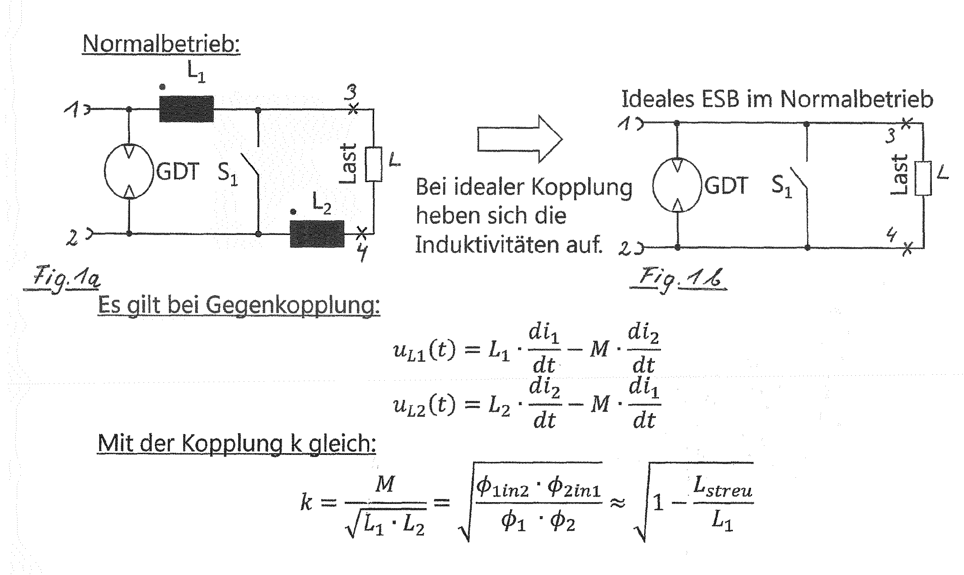

Aufgrund der Ausführung der Primärwicklung L₁ und der Sekundärwicklung L₂ als stromkompensierte Drossel mit Kern, heben sich bei gewünschter idealer Kopplung die Induktivitäten auf, so dass sich das in Figur 1b gezeigte Ersatzschaltbild ergibt. Die hier relevanten Beziehungen zur Gegenkopplung und Kopplung k sind in den Figuren 1a und 1b erläuternd hinzugefügt.

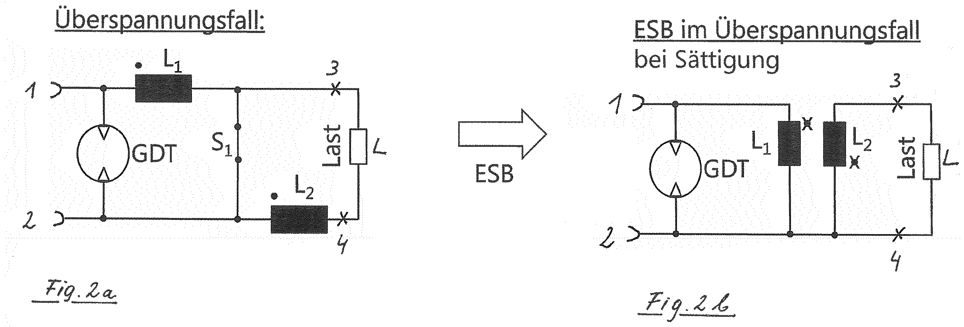

Im Überspannungsfall wie in den Figuren 2a und 2b gezeigt wird die Schalteinrichtung S₁, die bevorzugt als Halbleiterschalter, wiederum bevorzugt als IGBT ausgeführt ist, geschlossen. Im Ergebnis fließt durch die Primärwicklung L₁ ein hoher Strom, welcher den Wicklungskern in die Sättigung treibt. Hierdurch wird die Kopplung k zwischen der Primärwicklung L₁ und der Sekundärwicklung L₂ aufgehoben.

Bei Sättigung findet also keine Energieübertragung von der Primärseite auf die Sekundärseite der stromkompensierten Drossel mehr statt, das heißt über der Last wird keine Spannung aufgebaut.

Die verbleibende Restinduktivität von der Primärwicklung L₁ baut eine hohe Spannung auf, die in gewünschter Weise den Gasentladungsableiter GDT zündet.

Das entsprechende ideale Ersatzschaltbild im Überspannungsfall bei Sättigung ist in der Figur 2b gezeigt.

Der Wicklungskern der stromkompensierten Drossel wird so dimensioniert, dass die Kopplung k im Normalbetrieb k nahe 1 und im Überspannungsfall k nahe 0 ist.

Um die induktive Kopplung im Störimpulsfall möglichst schnell aufzuheben, ist es erforderlich, im Überspannungsfall den Kern der Drossel möglichst schnell in die Sättigung zu treiben. Um dies zu erreichen, haben sich auf der Grundlage umfangreicher Untersuchungen mit unterschiedlichen Kernen folgende Dimensionierungsparameter ergeben. Zum einen ist das Kernvolumen möglichst klein zu halten, um eine schnelle Sättigung zu erreichen. Weiterhin ist bei der Dimensionierung der Wicklungen darauf zu achten, dass sich diese nicht überlappen, das heißt, dass im Sättigungsfall die Sekundärinduktivität nicht von den Feldlinien der Primärinduktivität durchsetzt wird. Eine niedrige Kopplung im Sättigungsfall ist vorteilhaft. Weiterhin vorteilhaft ist eine Ausführungsform, bei der die Wicklungen um 90° gedreht zueinander aufgebaut werden, so dass die Feldlinien die Sekundärspule bei Sättigung nicht mehr senkrecht schneiden. Diesbezüglich kommen speziell gefertigte Kerne zum Einsatz, die in sich gedreht sind.

## Patentansprüche

1. Blitz- und Überspannungsschutzeinrichtung für Datennetzwerke, Telefonie, elektroakustische Anlagen oder Bussysteme mit mindestens zwei netzseitigen Eingangsklemmen (1; 2) sowie mindestens zwei Ausgangsklemmen (3; 4) an welche die zu schützende Last (L) anschließbar ist, weiterhin mit einem die Eingangsklemmen (1; 2) verbindenden Gasentladungsableiter (GDT) sowie einer zwischen der jeweiligen Ein- und Ausgangsklemme (1; 3/2; 4) befindlichen Induktivität,
wobei die Induktivitäten als stromkompensierte Drossel mit Kern sowie einer Primärwicklung (L₁) und einer Sekundärwicklung (L₂) ausgebildet sind und der Laststrom die Wicklungen (L₁; L₂) in unterschiedlichen Richtungen durchfließt, so dass sich die jeweiligen Magnetfelder aufheben, weiterhin mit einer Schalteinrichtung (S₁), die als Halbleiterschalter ausgebildet ist, wobei dessen Basis oder Gate mit einer der Eingangsklemmen (1) verbunden ist, so dass im Falle transienter Überspannungen der auftretende Stoßstrom mittels der sich dann schließenden Schalteinrichtung (S₁) an einer der beiden Wicklungen (L₂) vorbeigeführt wird, derart, dass durch die stromdurchflossene Wicklung (L₁) der Kern in die Sättigung gelangt und die Kopplung (k) zwischen den Wicklungen (L₁; L₂) aufgehoben ist, mit der Folge, dass über der Last (L) keine Spannung aufgebaut wird und die an der stromdurchflossenen Wicklung (L₁) anliegende Spannung den Gasentladungsableiter (GDT) zündet, wobei durch Öffnen der Schalteinrichtung (S₁) der Gasentladungsableiter (GDT) löschbar ist.

2. Blitz- und Überspannungsschutzeinrichtung nach Anspruch 1,
**dadurch gekennzeichnet, dass**
der Halbleiterschalter als IGBT ausgebildet ist.

3. Blitz- und Überspannungsschutzeinrichtung nach einem der vorangegangenen Ansprüche,
**dadurch gekennzeichnet, dass**
der Kern der stromkompensierten Drosseln als Ringkern ausgeführt ist.

4. Blitz- und Überspannungsschutzeinrichtung nach einem der vorangegangenen Ansprüche,
**dadurch gekennzeichnet, dass**
über das Ansprechverhalten der Schalteinrichtung (S₁) der jeweilige Schutzpegel der Gesamteinrichtung vorgebbar ist.

5. Blitz- und Überspannungsschutzeinrichtung nach einem der vorangegangenen Ansprüche,
**dadurch gekennzeichnet,**
**dass** die im Falle der geschlossenen Schalteinrichtung (S₁) weiterhin stromdurchflossene Wicklung (L₁) eine wirksame Induktivität von ≥ 2 µH aufweist.

6. Blitz- und Überspannungsschutzeinrichtung nach einem der vorangegangenen Ansprüche,
**dadurch gekennzeichnet,**
**dass** der Kern der stromdurchflossenen Drossel ein kleines Volumen zum Erreichen einer schnellen Sättigung aufweist.

7. Blitz- und Überspannungsschutzeinrichtung nach einem der vorangegangenen Ansprüche,
**dadurch gekennzeichnet,**
**dass** die Basis oder das Gate des Halbleiterschalters über eine TVS-Diode mit der Eingangsklemme (1) verbunden ist.

## Claims

1. Lightning and overvoltage protection device for data networks, telephony, electroacoustic installations or bus systems, comprising at least two network-side input terminals (1; 2) and at least two output terminals (3; 4) to which the load (L) to be protected can be connected, further comprising a gas discharge tube (GDT) connecting the input terminals (1; 2) as well as an inductor located between the input and output terminal (1; 3 / 2; 4) in each case, the inductors being formed as current-compensating throttles, comprising a core and a primary winding (L₁) and a secondary winding (L₂), and the load current passing through the windings (L₁; L₂) in different directions, in such a way that the associated magnetic fields cancel out, further comprising a switching device (S₁) formed as a semiconductor switch, the base or gate thereof being connected to one of the input terminals (1) in such a way that in the event of transient overvoltages the occurring surge current is bypassed around one of the two windings (L₂) by means of the switching device (S₁), which is then closed, in such a way that the active winding (L₁) reaches saturation and the coupling (k) between the windings (L₁; L₂) is eliminated, with the result that no voltage is built up by way of the load (L) and the voltage applied at the active winding (L₁) ignites the gas discharge tube (GDT), the gas discharge tube (GDT) being extinguishable by opening the switch device (S₁).

2. Lightning and overvoltage protection device according to claim 1,
**characterised in that**
the semiconductor switch is formed as an IGBT.

3. Lightning and overvoltage protection device according to any of the preceding claims,
**characterised in that**
the core of the current-compensated throttles is configured as an annular core.

4. Lightning and overvoltage protection device according to any of the preceding claims,
**characterised in that**
by way of the response behaviour of the switching device (S₁) the associated protection level of the entire device can be specified.

5. Lightning and overvoltage protection device according to any of the preceding claims,
**characterised in that**
the wire (L₁) which is still active when the switching device (S₁) is closed has an effective inductance ≥ 2 µH.

6. Lightning and overvoltage protection device according to any of the preceding claims,
**characterised in that**
the core of the active throttle has a small volume to achieve rapid saturation.

7. Lightning and overvoltage protection device according to any of the preceding claims,
**characterised in that**
the base or gate of the semiconductor switch is connected to the input terminal (1) via a TVS diode.

## Revendications

1. Dispositif de protection contre la foudre et les surtensions pour les réseaux de données, la téléphonie, les installations électroacoustiques ou les systèmes de bus, comportant au moins deux bornes d'entrée côté réseau (1 ; 2) ainsi qu'au moins deux bornes de sortie (3 ; 4) auxquelles la charge (L) à protéger peut être raccordée, comportant en outre un parafoudre à décharge de gaz (GDT) reliant les bornes d'entrée (1 ; 2) ainsi qu'une inductance située entre les bornes d'entrée et de sortie respectives (1 ; 3/2 ; 4), les inductances étant réalisées sous la forme d'une self à courant compensé avec un noyau ainsi qu'un enroulement primaire (L₁) et un enroulement secondaire (L₂), et le courant de charge circulant dans les enroulements (L₁ ; L₂) dans des sens différents, de sorte que les champs magnétiques respectifs s'annulent mutuellement, comportant en outre un dispositif de commutation (S₁) qui est réalisé sous la forme d'un commutateur à semi-conducteurs dont la base ou la grille est reliée à l'une des bornes d'entrée (1), de sorte qu'en cas de surtensions transitoires, le courant de choc qui apparaît passe à côté de l'un des deux enroulements (L₂) au moyen du dispositif de commutation (S₁) qui se ferme alors, de sorte qu'en raison de l'enroulement (L₁) parcouru par le courant, le noyau atteint la saturation et le couplage (k) entre les enroulements (L₁ ; L₂) est annulé, avec pour conséquence qu'aucune tension ne s'établit aux bornes de la charge (L) et que la tension présente aux bornes de l'enroulement parcouru par le courant (L₁) allume le parafoudre à décharge de gaz (GDT), le parafoudre à décharge de gaz (GDT) pouvant être éteint en ouvrant le dispositif de commutation (S₁).

2. Dispositif de protection contre la foudre et les surtensions selon la revendication 1,
**caractérisé en ce que**
le commutateur à semi-conducteurs est réalisé sous la forme d'un IGBT.

3. Dispositif de protection contre la foudre et les surtensions selon l'une des revendications précédentes,
**caractérisé en ce que**
le noyau des selfs à courant compensé est réalisé sous la forme d'un noyau toroïdal.

4. Dispositif de protection contre la foudre et les surtensions selon l'une des revendications précédentes,
**caractérisé en ce que**
le niveau de protection respectif du dispositif complet peut être prédéfini par le comportement de réponse du dispositif de commutation (S₁).

5. Dispositif de protection contre la foudre et les surtensions selon l'une des revendications précédentes,
**caractérisé en ce que**
l'enroulement (L₁) qui continue à être parcouru par le courant dans le cas du dispositif de commutation (S₁) fermé présente une inductance efficace ≥ 2 pH.

6. Dispositif de protection contre la foudre et les surtensions selon l'une des revendications précédentes,
**caractérisé en ce que**
le noyau de la self parcourue par le courant présente un petit volume pour atteindre une saturation rapide.

7. Dispositif de protection contre la foudre et les surtensions selon l'une des revendications précédentes,
caractérisé en que
la base ou la grille du commutateur à semi-conducteurs est reliée à la borne d'entrée (1) par une diode Transil.
